# EUROPEAN PATENT SPECIFICATION

(11) **EP 4 223 986 B1**
(45) Date of publication and mention of the grant of the patent: **08.04.2026**
(21) Application number: 22155313.4
(22) Date of filing: 07.02.2022
(51) Int. Cl.: F01D 25/14, F02C 7/12, F02C 7/18, F02C 7/25, F02C 9/00

(54) **TURBINE GENERATOR SYSTEM**
TURBINENGENERATORSYSTEM
SYSTÈME DE GÉNÉRATEUR DE TURBINE

(43) Date of publication of application: 09.08.2023
(73) Proprietor: Rolls-Royce Deutschland Ltd & Co KG, 15827 Blankenfelde-Mahlow (DE)
(72) Inventor: DIAZ, Carlos, 15827 Blankenfelde-Mahlow (DE)
(74) Representative: Müller, Wolfram Hubertus

(56) References cited:
- US-A1- 2004 060 278
- US-A1- 2005 086 943
- US-A1- 2006 080 950
- US-A1- 2016 152 344

## Description

The present disclosure relates to a turbine generator system that is implemented in a hybrid electric aircraft.

A hybrid electric aircraft includes a turbine generator system (TGS) which comprises a gas turbine engine and an electrical generator. The gas turbine engine provides for a mechanical output which is converted by the electrical generator into an electrical output that provides electricity to an electric propulsion system of the hybrid electric aircraft.

The turbine generator system may be arranged in a separated aircraft compartment. The TGS compartment requires ventilation and drainage to prevent the accumulation of flammable fluids and further requires cooling to ensure that all components inside the compartment operate under their maximum allowable temperature.

Document US 2005/086943 A1 discloses a turbine compartment of an industrial gas turbine used for power generation. The turbine compartment comprises air inlets via which air is drawn in and flows through the turbine compartment as ventilation air. The ventilation air leaves the turbine compartment via an air outlets proximate to which fans are located. The document further discloses that the temperature of the air leaving the turbine housing is measured by means of thermocouples. The temperature is kept below a predetermined value via a controller by adjusting the fan speed.

Document 2006/080950 A1 discloses a cooling system for a gas turbine engine. The cooling system comprises a fan assembly coupled with an inlet duct.

Document US 2004/060278 A1 discloses a passive cooling system for an auxiliary power unit installation on an aircraft that comprises a main air inlet opening in the aircraft exterior skin.

Document US 2016/152344 A1 discloses an auxiliary power unit compartment that comprises fire control features.

The problem underlying the present invention is to provide for ventilation and cooling in a turbine generator system in an effective manner.

This problem is solved by a turbine generator system with the features of claim 1. Embodiments of the invention are identified in the dependent claims.

Accordingly, a turbine generator system for a hybrid electric aircraft is provided that comprises a gas turbine engine having an output shaft and an electrical generator coupled to the gas turbine engine output shaft. The electrical generator converts mechanical energy of the gas turbine output shaft into electrical energy. The gas turbine engine is located in a compartment that includes a compartment wall.

The turbine generator system further comprises a ventilation system having:
- at least one air inlet arranged in the compartment wall and configured to allow air to flow into the compartment,
- at least one air outlet arranged in the compartment wall and configured to allow air to flow out of the compartment,
- at least one electric cooling fan with an adjustable fan speed located in, upstream or downstream of the air inlet, the electric cooling fan adjusting by its fan speed the amount of air flowing into the compartment, and
- temperature sensing means sensing the temperature inside the compartment or at the air outlet,
- wherein the ventilation system is configured such that the cooling fan adjusts its fan speed depending on the temperature sensed by the temperature sensing means.

Aspects of the invention are thus based on the idea to provide for a ventilation system by means of at least one electric cooling fan associated with at least one air inlet of the compartment. By adjusting the fan speed of the electric cooling fan the amount of air that passes through the compartment towards the air outlet and thus the amount of ventilation and cooling that the components arranged in the compartment receive can be adjusted. The adjustment of the fan speed is dependent on the temperature inside of the compartment determined by temperature sensing means. In this manner, effective cooling and ventilation of the compartment and its components dependent on the temperature sensed by the temperature sensing means is provided for.

A further advantage associated with aspects of the invention lies in that cooling of the compartment is by active means, namely, an electric cooling fan or several electric cooling fans, the active means being independent of the operating status of the gas turbine engine. Accordingly, cooling can be provided even during aircraft static conditions, during taxi or even when the aircraft is static on the ground and the gas turbine is shut down. The active cooling allows for a very safe shut down of the turbine generator system and minimizes the possibility of damage to components during soak back, i.e., during an increase in temperature after shutdown of the gas turbine engine caused by a reduced availability of ventilation and cooling after the shutdown.

A still further advantage associated with aspects of the invention lies in the use of an electric cooling fan. The electric cooling fan can be powered by batteries of the hybrid electric aircraft which may be quickly charged using the turbine generator system, thereby avoiding any dependency on external energy sources.

Still further, as cooling and ventilation depend on the temperature sensed by the temperature sensing means, there is an automatic indirect account for the ambient temperature of the aircraft when the aircraft is on ground, wherein less cooling is provided in cold days compared to the cooling provided in hot days. Moreover, it may be provided that the active cooling (fans) will be switched off when the aircraft is flying at high altitude, where ambient temperature is low, and/or at high speed. Therefore, the active cooling with fans may be used only when needed.

The air inlet comprises first and second air inlets and the electric cooling fan comprises first and second electric cooling fans each associated with one of the first and second air inlets, wherein the first and second air inlets are located symmetrically in the compartment. The inlets may be symmetrical to the main axis of an aircraft in which the turbine generator system is implemented.

The ventilation system may further comprise third and fourth air inlets which are not associated with a cooling fan. The first and second air inlets may be lower air inlets, wherein the third and fourths air inlets are upper air inlets and thus located elevated in the compartment compared to the first and second air inlets. All four inlets may be symmetrical to the main axis of an aircraft.

The air inlet can be formed in a plurality of ways. In one embodiment, the air inlet is formed by a scoop inlet. A scoop inlet is any inlet which comprises a structure that protrudes from the compartment skin into the air stream. A scoop inlet is very effective in directing air into the compartment, but is associated with drag.

In an embodiment, the scoop inlet forms an upstream duct at the outside of the compartment, wherein the electric cooling fan is located in the upstream duct. In another embodiment, the scoop inlet forms a downstream duct inside the compartment, wherein the electric cooling fan is located in the downstream duct.

In another group of embodiments the air inlet is formed by a flush inlet. A flush inlet is any inlet which is formed in the compartment skin without any parts or structure protruding into the airstream. A variety of flush inlets is known to the skilled person such as NACA inlets (NACA = National Advisory Committee for Aeronautics) or a rectangularly formed inlets.

With a flush inlet, the cooling fan may be located in or downstream of the flush inlet.

In an embodiment, the flush inlet comprises a grid located in an opening in the wall/skin of the compartment, wherein the cooling fan is located behind the grid, thereby effectively determining by its fan speed the amount of air flowing into the compartment.

The system of the present invention can implement a plurality of control procedures that define the dependency between the temperature sensed by the temperature sensing means and the fan speed of the electric cooling fan. Such control procedures may be implemented through a controller or directly in hardware electric circuits. Using a controller, the dependency of the fan speed on the sensed temperature may be set in any desired manner. Also, using a controller allows to provide control signals to a cockpit in a simple and efficient manner.

In one embodiment, the system is configured to adjust the fan speed depending on the temperature sensed by the temperature sensing means by means of the following control procedure:
- If the temperature sensed by the temperature sensing means is below a first threshold, the cooling fan is shut down. This follows the rationale that there is no need for ventilation and cooling if the temperature in the compartment is low.
- If the temperature sensed by the temperature sensing means is at or above the first threshold and below a second threshold, the fan speed is rising with the temperature. The rise of the fan speed may follow a linear function of the temperature.
- If the temperature sensed by the temperature sensing means is at or above the second threshold and below a third threshold, the fan speed is at a maximum value. The maximum value fan speed ensures effective cooling and ventilation of the compartment and components between the second and third thresholds.
- If the temperature sensed by the temperature sensing means is at or above the third threshold, the cooling fan is shut down. The third threshold defines a temperature which corresponds with a fire situation. Accordingly, sensing a temperature at or above the third threshold means detecting a fire. In such case, the cooling fans are shut down to decrease the amount of air sent into the compartment.

The above procedure is to be understood as an example only. Another procedure may provide for two thresholds only, wherein the electric fan is shut down below the first and above the second threshold and runs with maximum speed between the first and second thresholds.

As mentioned before, the system may comprise a controller such that the cooling fan is configured to adjust its fan speed based on signals received from the controller, wherein the controller is configured to receive input signals from the temperature sensing means and control the fan speed. The user may be further configured to provide status information to a cockpit.

For example, the above described control procedure may be refined by the use of a controller such that the controller is further configured to send an overheating warning message to the cockpit if the sensed temperature is above a fourth threshold which lies between the second threshold and the third threshold and/or is configured to send a fire alarm warning message to the cockpit if the sensed temperature is at or above the third threshold. The overheating warning message communicates a compartment overheat to the cockpit. The fire alarm warning message communicates a fire alarm to the cockpit.

The temperature sensing means may be implemented in a plurality of ways. Embodiments include that the temperature sensing means comprise a thermocouple. The thermocouple may be located at or in close proximity to the air outlet. For example, if the air outlet comprises an exhaust grid, the thermocouple may be located centered in or close to the exhaust grid.

In another embodiment, the thermocouple is located inside the compartment. For example, it may be located between two components in the compartment that have the lowest temperature limit.

In another embodiment, the temperature sensing means comprises two thermocouples located inside the compartment, wherein the controller is configured to send an overheating warning message to the cockpit if the temperature sensed by any of the thermocouples is above the fourth threshold and/or is configured to shut the electric cooling fan off and to send a fire alarm warning message to the cockpit if the temperature sensed by any of the thermocouples is above the third threshold. The two thermocouples may be installed near the two components in the compartment that have the lowest temperature limit. This ensures that the temperature in the compartment does not exceed the temperature limit to protect each of these components.

In further embodiments, more than two thermocouples or other temperature sensing means may be installed inside the compartment.

In other embodiments the temperature sensing means comprise a temperature-dependent resistor (thermistor). The temperature-dependent resistor may be an NTC resistor (NTC = negative temperature coefficient).

When using a temperature-dependent resistor/thermistor as temperature sensing means, it is not necessarily required to additionally have a controller controlling the fan speed, even though a controller may still be implemented. The resistance of the NTC resistor decreases when there is an increase in temperature such that the electrical conductivity increases with temperature which results in an increment of a voltage. This can be used to cause the speed of the fans to increase. Accordingly, a direct control of the fan speed is possible using an NTC resistor.

The thermistor may be located at the air outlet or may be located inside the compartment in the same manner as discussed with respect to the implementation of the temperature sensing means by a thermocouple.

In an embodiment, the temperature sensing means comprises two temperature-dependent resistors, wherein the resistance of each resistor determines the fan speed of one of the electric fans. Accordingly, each cooling fan is associated with one temperature-dependent resistor and both cooling fans can turn at a different speed if the thermal environment of the temperature-dependent resistors is not the same. The sensing and regulating functions are both performed by the temperature-dependent resistors without the need of a controller (which, however, may be implemented in embodiments to allow for a specific definition of the dependency between the temperature of the temperature-dependent resistors and the fan speed and/or for communication with a cockpit).

If there is no controller to communicate with the cockpit, a thermal fuse may be installed in the compartment in order to switch off the cooling fan(s) in the event of a fire, wherein the thermal fuse opens a fan electric circuit if the temperature where the thermal fuse is located exceeds a threshold.

The electrical generator typically includes an input shaft. A gearbox is provided which couples the gas turbine output shaft with the electrical generator input shaft. The gearbox is also located in the compartment and, accordingly, is also ventilated and cooled. Further, the generator may be located in the compartment.

A further aspect of the invention regards a hybrid electric aircraft. The hybrid electric aircraft comprises a turbine generator system in accordance with claim 1. Electric motors that drive propellers are provided and configured to be powered directly or indirectly by the electrical generator of the turbine generator system.

The hybrid electric aircraft may comprise an energy storage device such as one or several batteries, wherein the electrical generator powers the energy storage device and the energy storage device powers the electric motors. The electrical generator may also power the electric motors directly. Further, inverters and/or rectifiers for converting DC power to AC power and vice versa may be implemented as known to the skilled person.

The invention will be explained in more detail on the basis of exemplary embodiments with reference to the accompanying drawings in which:
- Fig. 1: is a schematic embodiment of a hybrid electric aircraft comprising a turbine generator system and electric motors;
- Fig. 2: shows an embodiment of the center part of the hybrid electric aircraft of Fig. 1 in which the turbine generator system is implemented;
- Fig. 3: is an embodiment of a turbine generator system that comprises a gas turbine engine, an electrical generator and a gearbox arranged in a compartment, wherein a ventilation system is provided which includes air inlets formed as a scoop inlets;
- Fig. 3a: is a first embodiment of a scoop inlet in the system of Fig. 3;
- Fig. 3b: is a second embodiment of a scoop inlet in the system of Fig. 3;
- Fig. 3c: is a third embodiment of a scoop inlet in the system of Fig. 3;
- Fig. 4: is a further embodiment of a turbine generator system that comprises a gas turbine engine, an electrical generator and a gearbox arranged in a compartment, wherein a ventilation system is provided which includes air inlets formed as a flush inlet;
- Fig. 4a: is an alternative embodiment of a flush inlet in the system of Fig. 4;
- Fig. 5: shows an example implementation of the turbine generator system of Fig. 3;
- Fig. 6: depicts schematically a temperature sensing system which includes a thermocouple and a controller;
- Fig. 7: depicts schematically the location of a thermocouple in the exhaust grid of a turbine generator system in accordance with Fig. 2;
- Fig. 8: depicts in a curve the fan speed as a function of the measured temperature in case of one thermocouple located at the air outlet as depicted in Fig. 7;
- Fig. 9: depicts schematically the location of a thermocouple inside the compartment of a turbine generator system;
- Fig. 10: depicts in a curve the fan speed as a function of the measured temperature in case of one thermocouple located inside the compartment as depicted in Fig. 9;
- Fig. 11: depicts schematically a temperature sensing system which includes two thermocouples and a controller;
- Fig. 12: depicts schematically the location of two thermocouples inside the compartment of a turbine generator system;
- Fig. 13: depicts in a curve the fan speed as a function of the measured temperature in case of two thermocouples located inside the compartment as depicted in Fig. 12;
- Fig. 14: depicts schematically an electric circuit of a ventilation and cooling system of a turbine generator system that comprises two electric fans and a thermistor, wherein the thermistor is a temperature sensing element of the turbine generator system;
- Fig. 15: depicts schematically the location of a thermistor in the exhaust grid of a compartment containing a turbine generator system in accordance with Fig. 2;
- Fig. 16: depicts in a curve the fan speed as a function of the thermistor temperature in case of one thermistor located at the air outlet as depicted in Fig. 15;
- Fig. 17: depicts schematically the location of a thermistor inside the compartment of a turbine generator system;
- Fig. 18: depicts in a curve the fan speed as a function of the thermistor temperature in case of one thermistor located inside the compartment as depicted in Fig. 17;
- Fig. 19: depicts schematically an electric circuit of a turbine generator system that comprises two electric fans and two thermistors, wherein the thermistors are temperature sensing elements of the turbine generator system;
- Fig. 20: depicts schematically the location of two thermistors inside the compartment of a turbine generator system; and
- Fig. 21: depicts in a curve the fan speed as a function of the thermistor temperature for each of the thermistors located inside the compartment as depicted in Fig. 20.

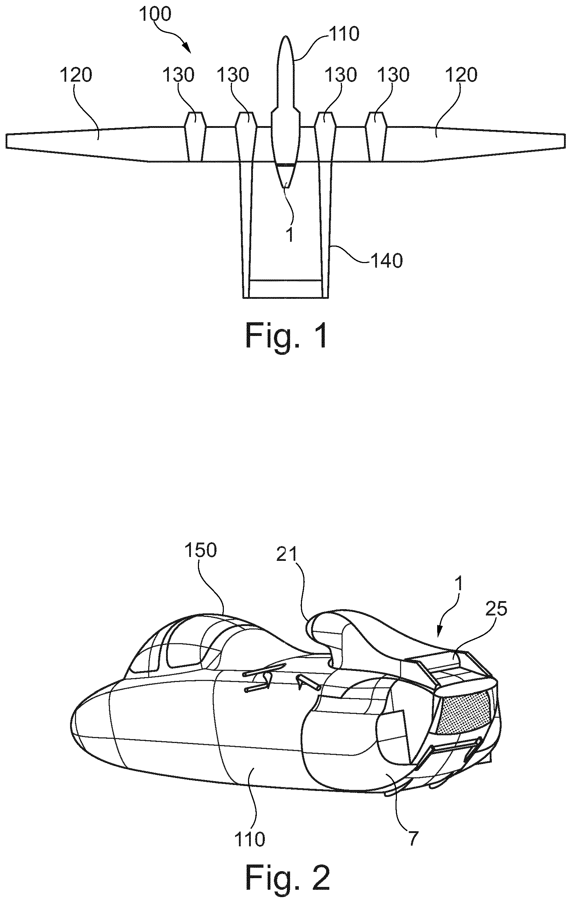

Fig. 1 shows schematically a hybrid electric aircraft 100 which comprises a center body (fuselage) 110, wings 120, a tail 140 and a propulsion system that includes a turbine generator system 1 and a plurality of electric motors 130 arranged along the wings 120. Each electric motor 130 drives a propeller (not shown). The electric motors 130 may be of any suitable type such as permanent magnet direct current. The propulsion system further includes inverters and/or rectifiers as well as a battery which stores electrical power produced by the turbine generator system 1 (not shown). The electric motors 130 are powered by the battery and or the gas turbine generator system in a manner known to the skilled person and not subject of the present invention.

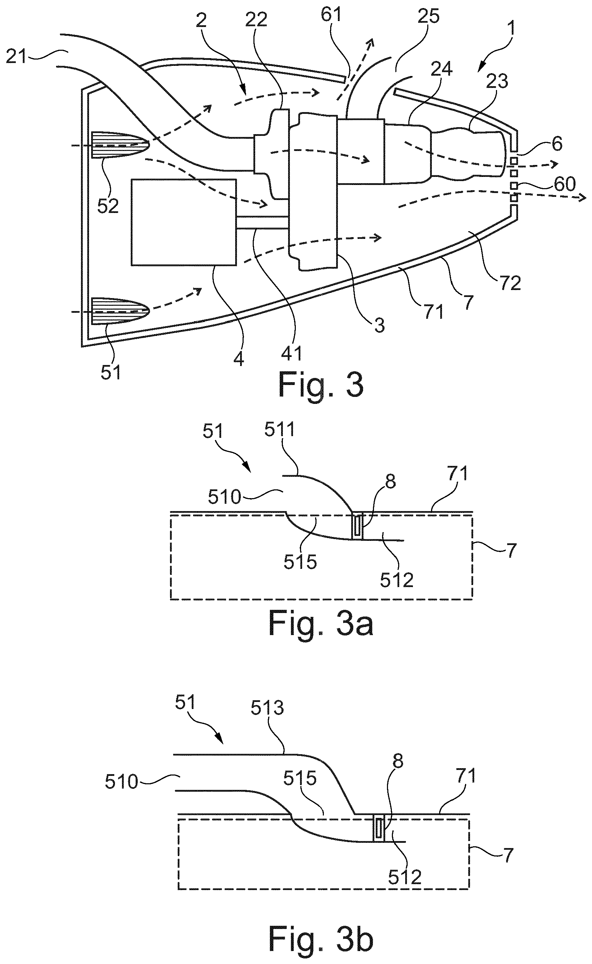

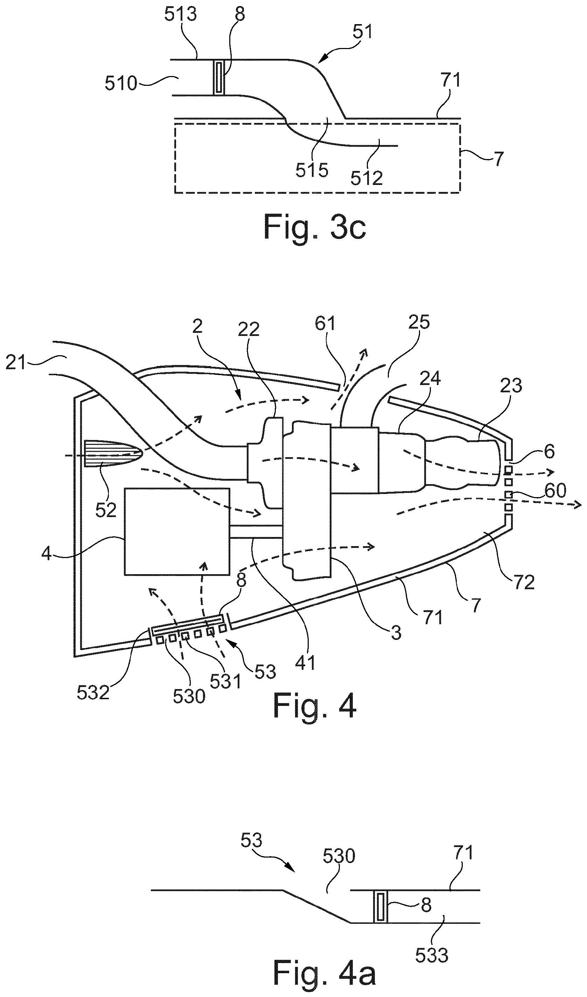

The turbine generator system 1 is located at the rear end of the center body 110. Fig. 2 depicts an embodiment of the center body 110 with turbine generator system 1. The center body forms a cockpit 150 at its front end. As will be further discussed with respect to Fig. 3, the turbine generator system 1 includes a gas turbine engine, a gearbox and an electrical generator, wherein the gas turbine engine comprises a gas turbine inlet 21 and a gas turbine exhaust 25 that are depicted in Fig. 2.

The turbine generator system 1 comprises a compartment 7, wherein the components of the turbine generator system 1 are located inside the compartment 7. It is necessary to ensure that the compartment 7 and its components are sufficiently ventilated and cooled to avoid the accumulation of inflammable fluids and to keep the components below a maximum allowable temperature.

Fig. 3 depicts an embodiment of a turbine generator system 1. The main components of the turbine generator system 1 are a gas turbine engine 2, an electrical generator 4 and a gearbox 3 coupling an output shaft of the gas turbine engine 2 with an input shaft 41 of the electrical generator 4.

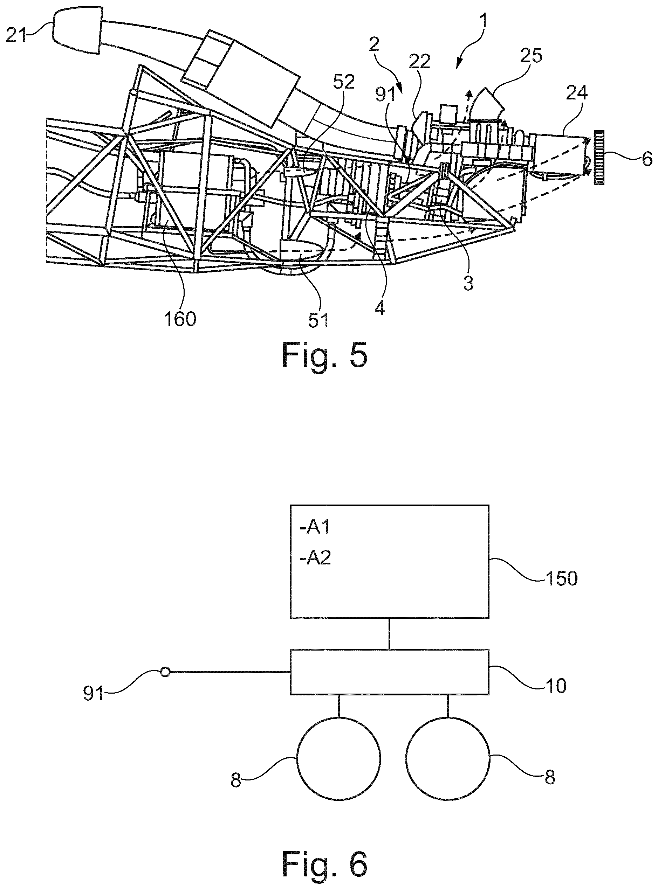

More particularly, the gas turbine engine 2 comprises a gas turbine inlet 21, a compressor 22, a combustor 23, a turbine 24, and a gas turbine exhaust 25 through which gas exits the gas turbine engine 2 in a radial direction. The gas turbine engine 2 works in a conventional manner such that air entering the inlet 21 is compressed by compressor 22 before delivering that air to the combustor 23 where it is mixed with fuel and the mixture is combusted. The resultant hot combustion gases then expand through the turbine 24 and thereby drive the turbine 24 before being exhausted through exhaust 25. The turbine 24 drives an output shaft not shown in Fig. 3 (but depicted in Fig. 5).

It is pointed out that other configurations of a gas turbine engine may be implemented as well. The exact structure and buildup of the gas turbine engine 2 is not of relevance for the present invention.

The electrical generator 4 is configured to convert mechanical energy received through an input shaft 41 into electrical energy which is provided as output of the electrical generator 4. The output electrical energy may supply a battery and/or directly electrical motors. The electrical generator 4 may be of any known type.

The output shaft of the gas turbine engine 2 and the input shaft 41 of the electrical generator 4 are coupled through the gearbox 3, which may be a planetary gearbox that translates a higher rotational speed of the gas turbine engine output shaft into a lower rotational speed of the electrical generator input shaft 41. The gearbox 3 may further implement an auxiliary section for driving other components of the gas turbine engine 2 such as fuel pumps, oil pumps, centrifugal oil separators, hydraulic pumps, starters, fuel control, etc.

The mentioned components 2, 3, 4 of the turbine generator system 1 are located inside a compartment 7 that has a compartment wall 71 that surrounds a compartment interior 72. The compartment wall 71 may be formed of a composite material or other suitable material. The compartment wall 71 may be formed in one piece or by a plurality of connected individual walls.

The compartment 7 comprises two air inlets 51 in a lower part of the compartment 7 and two air inlets 52 in a middle part of the compartment 7. The lower air inlets 51 are each associated with an electrical cooling fan, as will be discussed with respect to Figs. 3a to 3c. The cooling fans are driven by electric motors that have a variable speed drive. The upper air inlets 52 are not associated with a cooling fan. The four air inlets 51, 52 may be arranged symmetrical to the main axis of the aircraft, see Fig. 1. The compartment 7 further comprises a main air outlet 6 which is located at the aft end of the compartment and contains a protection grid 60. A further air outlet is provided by a ventilation exhaust gap 61 around exhaust 25.

As schematically shown by the arrows in Fig. 3, air enters the compartment 7 through the air inlets 51, 52 and flows through the compartment 7 to exit through main air outlet 6 or further air outlet 61, thereby ventilating the compartment 7 and cooling the components located in the inside 72 of compartment 7.

In Fig. 3, the air inlets 51, 52 are each formed as a scoop inlet. Embodiment of scoop inlet 51 are shown in Figs. 3a to 3c. According to Fig. 3a, the air inlet 51 comprises an opening 515 in the compartment wall 71. An outwardly protruding, curved wall 510 forms together with the compartment wall 71 an inlet 510 through which air enters into the air inlet 51. At the inside of the compartment 7, a duct 512 is formed downstream of opening 515. In duct 512, an electric cooling fan 8 is placed, wherein the electric cooling fan 8 has an adjustable fan speed which determines the amount of air flowing through air inlet 51 into the compartment 7.

In Fig. 3b, the air inlet 51 forms an upstream duct 513 which extends in the upstream direction from opening 515. At its front end 510, the upstream duct 513 defines an inlet 510 of the air inlet 51. An electrical cooling fan 8 is located in a downstream duct similar as in Fig. 3a.

In Fig. 3c, an upstream duct 513 is implemented similar as in Fig. 3b. In the embodiment of Fig. 3c, the electrical cooling fan 8 is located in the upstream duct 513. The electrical cooling fan 8 may be located in a middle section of the upstream duct 513.

Air inlets 52 may be formed in a similar manner as shown in Figs. 3a to 3c, however, without implementing an electrical cooling fan.

In all embodiments, the variable fan speed with which the electrical fans 8 are rotating is related to and depends on the temperature in the compartment 7. Embodiments of how this temperature is determined are discussed with respect to Figs. 6 to 21. Generally, temperature sensing means (not shown in Fig. 3) are located inside the compartment 7 or at the compartment air outlet 6, wherein the sensed temperature determines the fan speed of the electrical fans 8. The sensed temperature may determine the fan speed directly or through a controller.

In embodiments, the electrical fan may be shut down if the atmospheric air temperature is below a specific threshold.

Fig. 4 depicts a further embodiment of a turbine generator system 1 which is similar to the embodiment of Fig. 3 except for the construction of the lower air inlets. In the embodiment of Fig. 4, the lower air inlets 53 are formed as flush inlets, i.e., the air inlets 53 do not comprise any components protruding into the air flow. In the depicted embodiment, the air inlet 53 is formed by an opening 530 in the compartment wall 71 and a grid 531 arranged in the opening 530. Behind the grid 531 an electric cooling fan 8 is placed which adjusts by its fan speed the amount of air flowing into the compartment 7.

The air inlet 53 forms by means of a wall 532 a short downstream duct in which the electrical cooling fan 8 is located.

The upper air inlets 52 in Fig. 4 may be formed as scoop inlets similar as in Fig. 3. Alternatively, they are also formed as flush inlets.

It is pointed out that the embodiment of a flush inlet shown in Fig. 4 is to be understood as an example only. Other forms of flush inlets may be implemented instead. Fig. 4a shows schematically a flush inlet 53 that comprises an opening 530 in the compartment wall 7 and a downstream duct 533 in which an electric cooling fan 8 is placed. The opening 530 may have a variety of shapes such as the shape of NACA inlets or a rectangular shape.

Fig. 5 depicts a turbine generator system 1, wherein the individual elements are depicted in more detail. However, the compartment 7 is not shown. Fig. 5 shows in addition to

Figs. 3 and 4 a power electronics unit 160 which is connected to the electrical generator 4. The power electronics unit 160 may comprise batteries, inverters and rectifiers and may drive electric motors as shown in Fig. 1.

Fig. 6 depicts a control system that controls the fan speed of the electric fans 8. The control system comprises temperature sensing means 91, a controller 10 and electric fans 8. According to the invention, there are provided two electric fans 8. However, in an example falling outside the scope of the claims, there may be provided a single electric fan. Furthermore there may be provided more than two electric fans dependent on the number of air inlets associated with an electric fan.

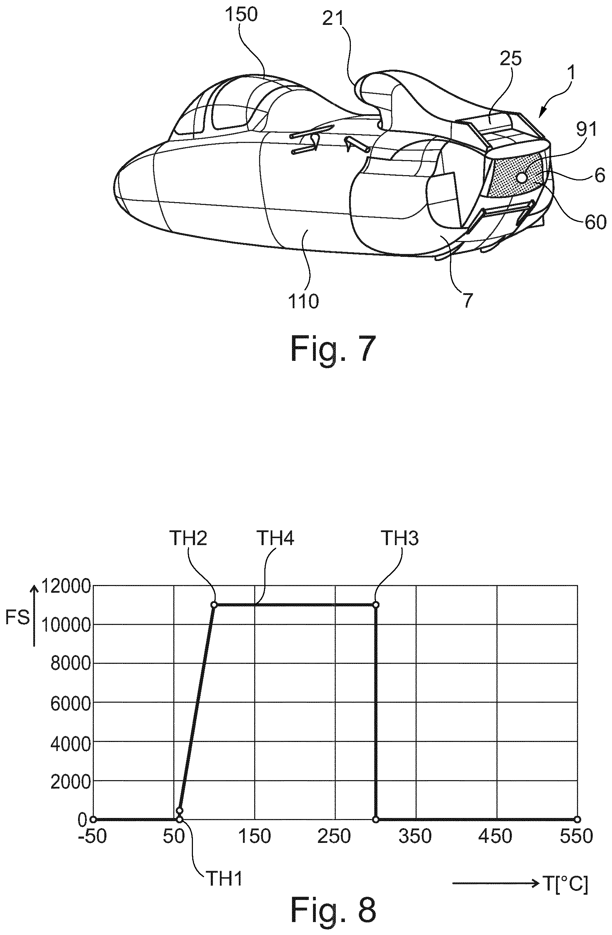

The temperature sensing means 91 may be in the form of a thermocouple. The thermocouple 91 may be located inside the compartment 7 or at or in close proximity to the air outlet 6, see Figs. 3 and 4. The controller 10 receives as input temperature signals from the temperature sensing means 91. Dependent on the sensed temperature, the controller 10 provides control signals to the electric fans 8 which determine the fan speed of the electric fans 8. The controller 10 may implement specific control procedures or control curves as described with respect to Figs. 8, 10 and 13. Further, the controller 10 interacts with a cockpit 150 of the aircraft and provides status information to the cockpit 150. Examples of the status information that is provided is status information A1 and status information A2 that will be discussed further below.

Fig. 7 shows the center part 110 of an aircraft implementing in its rear part a gas turbine engine similar as in Fig. 2. A thermocouple 91 is supported by and arranged centrally at grid 60 of air outlet 6. It may be placed inside the compartment 7 at a small distance such as 0.5 cm away from the exhaust grid 60.

Fig. 8 depicts a curve indicating the dependency of the fan speed FS on the temperature in the compartment 7. The fan speed FS is depicted in units of revolution per minute. The curve is determined by the control signals provided by controller 10 of Fig. 6 to the electric fans 8 based on the temperature sensed by thermocouple 91 of Fig. 7 and based on a predefined control profile.

According to Fig. 8, if the measured temperature is below a first threshold TH1, e.g., 60 °C, the fan is shut down (Fan speed = 0 rpm). If the measured temperature is between the first threshold TH1 and a second threshold TH2, e.g., 100 °C, the fan speed depends linearly on the measured temperature. If the measured temperature is above the second threshold TH2 and below a third threshold TH3, e.g., 300 °C, the fan speed is at a maximum, in the depicted example at 11000 rpm. If the measured temperature is above the third threshold TH3, the fan is shut down as the third threshold TH3 indicates a fire condition in which no air shall be blown into the fire.

In addition, the controller 10 of Fig. 6 may communicate with the cockpit 150 as follows. If the measured temperature exceeds a fourth threshold TH4, e.g., 180 °C, the controller 10 sends a warning signal A1 "AMBER OVERHEAT" to the cockpit 150. If the measured temperature exceeds the third threshold TH3, a warning signal A2 "RED FIRE ALARM" is sent to cockpit 150.

The embodiment of Fig. 8 allows for overheat alarm and for fire alarm with two different temperature thresholds (e.g. 180 °C for overheat alarm and 300 °C for fire alarm). In another embodiment, one alarm signal only (overheat or fire) is provided.

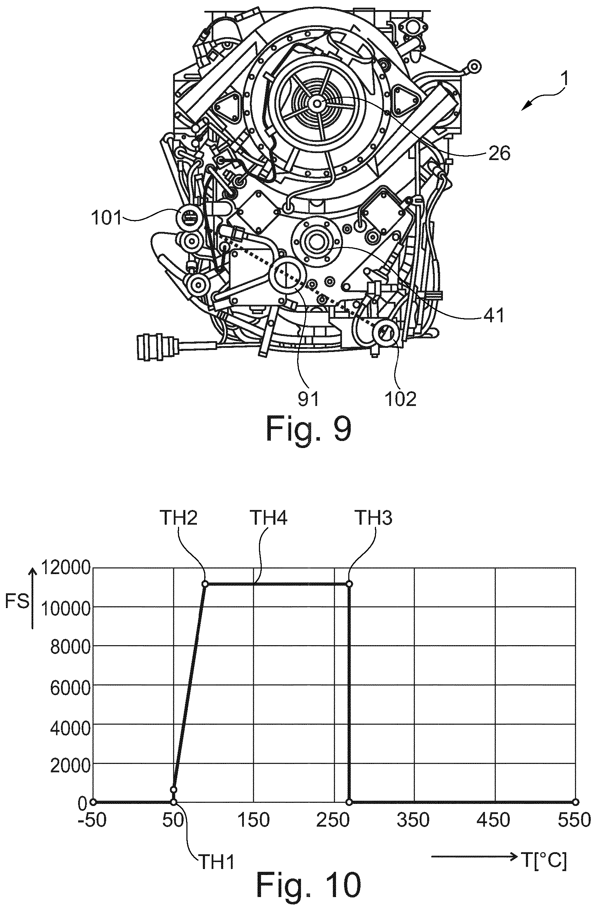

Fig. 9 is a rear view of a turbine generator system 1 and depicts an embodiment in which a thermocouple 91 is located not at the air outlet 6 as in Fig. 7 but inside the compartment 7, such as near gearbox 3. The thermocouple 91 is installed between two components 101 and 102 that have the lowest temperature limit. Fig. 9 also indicates the output shaft 26 of the gas turbine engine and the input shaft 41 of the electrical generator.

Fig. 10 shows of the corresponding fan speed as a function of the measured temperature using a controller 10 as shown in Fig. 6. The curve is the same as in Fig. 8 such that reference is made to Fig. 8 with respect to the description of the curve. The only difference lies in that the temperature thresholds TH1 to TH4 are lower. The first temperature threshold TH1 is at 50 °C, the second threshold TH2 is at 90 °C, the third threshold TH3 is at 270 °C, and the fourth threshold TH4 is at 150 °C. The respective thresholds are lower than in Fig. 8 as they are measured near components which have the lowest temperature limit.

The embodiment of Fig. 10 (as the embodiment of Fig. 8) allows for overheat alarm and for fire alarm with two different temperature thresholds (in this embodiment 150 °C for overheat alarm and 270 °C for fire alarm).

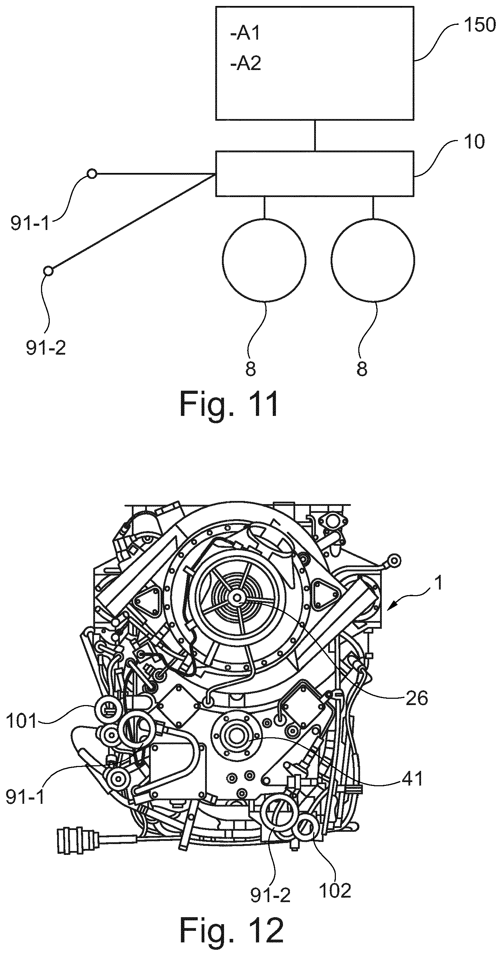

Fig. 11 shows a further embodiment of a control system that controls the fan speed of the electric fans 8. The control system is similar to the control system of Fig. 6 except that the control system comprises two temperature sensing means 91-1, 91-2 which may be implemented as thermocouples. As shown in Fig. 12, the two thermocouples 91-1 and 91-2 may be located inside the compartment 7 near the two components 101, 102 that have the lowest temperature limit.

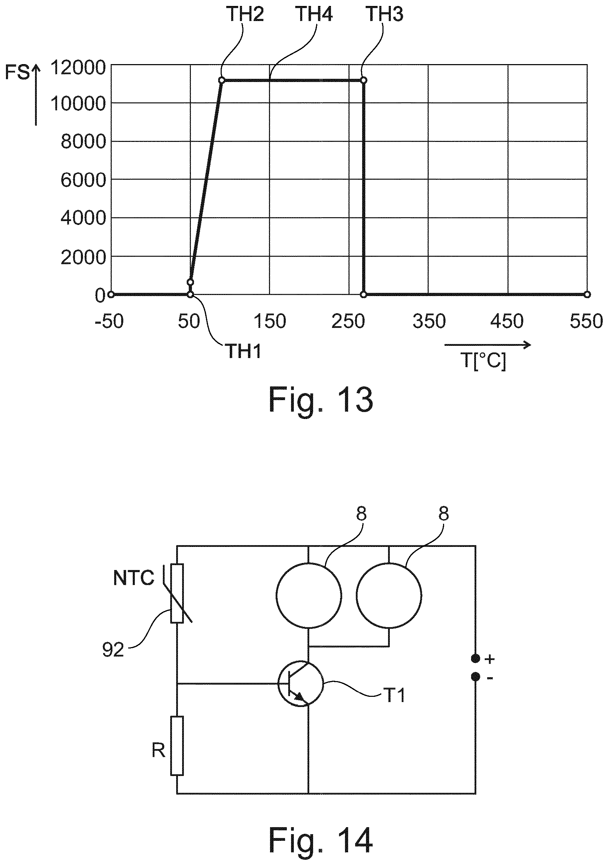

Fig. 13 shows of the corresponding fan speed as a function of the measured temperature using the controller 10 of Fig. 11. The curve is similar to the curves depicted in Figures 8 and 10, wherein the first, second, third and fourth thresholds are similar to the respective thresholds in Fig. 10. The difference to those embodiments lies in that the fan speed is zero if both of the two thermocouples 91-1, 91-2 measures a temperature below the first threshold TH1, is linearly dependent on the temperature if any of the two thermocouples 91-1, 91-2 measures a temperature that lies between the first threshold TH1 and the second threshold TH2, is at a maximum if any of the two thermocouples 91-1, 91-2 measures a temperature that lies between the second threshold TH2 and the third threshold TH3, and is zero if any of the two thermocouples 91-1, 91-2 measures a temperature above the third threshold TH3. The two electric fans 8 always have the same fan speed.

Further, the first warning signal A1 is provided to the cockpit 150 if any of the two thermocouples 91-1, 91-2 measures a temperature that is above the fourth threshold TH4 and the second warning signal A2 is provided to the cockpit 150 if any of the two thermocouples 91-1, 91-2 measures a temperature that is above the third threshold TH3.

The use of two thermocouples increases the safety that the temperature in the compartment 7 does not exceed the relevant temperature of those components that have the lowest temperature limit.

Figures 14 to 21 regard embodiments in which the temperature sensing means are not implemented as thermocouples but instead by thermistors, in particular NTC thermistors which have a resistance in that decreases as the temperature rises.

When implementing NTC thermistors as a temperature sensing means, both the sensing and the regulating function may be performed by the NTC thermistors, thereby eliminating the need for a controller. Fig. 14 shows an electrical circuit comprising a transistor T1, two electric fans 8, a resistor R and an NTC thermistor 92. Both electric fans 8 are connected to one NTC thermistor 92 and turn at the same speed. The resistance of the NTC thermistor 92 decreases when there is an increase in temperature. In such case, the electrical conductivity also increases which results in an increment of the voltage at the base of transistor T1. This causes the transistor T1 to increase the current between its other terminals such that the speed of the electric fans 8 increases. Accordingly, it is possible to control the speed of both fans 8 when the temperature of the NTC thermistor 92 changes.

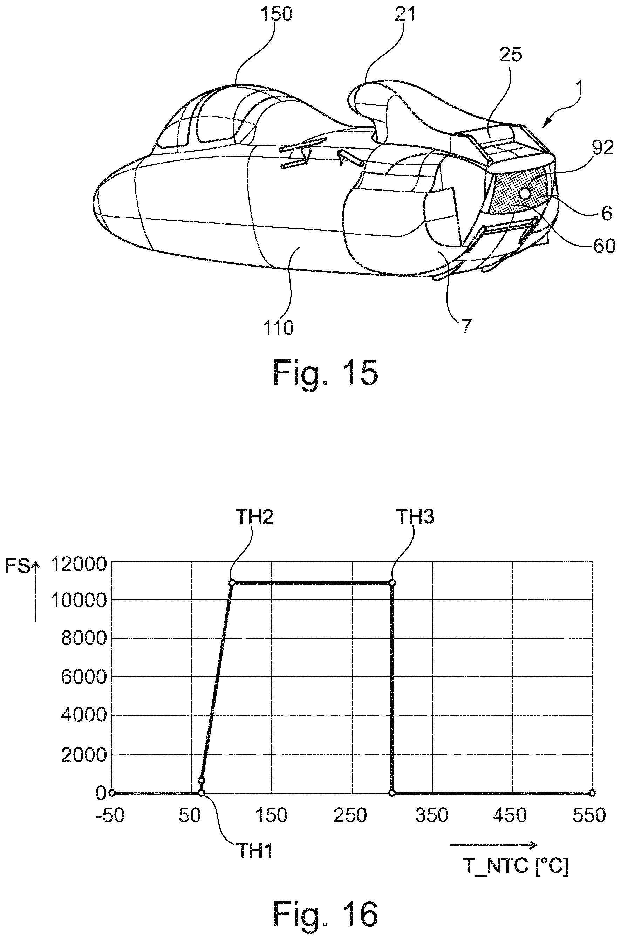

In Fig. 15, a NTC thermistor 92 is located centrally at grid 60 of air outlet 6 similar to the embodiment of Fig. 7. Fig. 16 shows the corresponding fan speed as a function of the temperature measured as the temperature T_NTC of the thermistor 92. The curve is similar to the curve of Fig. 8 such that reference is made to the description of Fig. 8. However, there is no controller involved and no warning messages are sent to the cockpit. In order to switch off the cooling fans in the event of a fire, it is necessary to install a thermal fuse (not shown in the figure) that opens the fan electric circuit if the temperature where the thermal fuse is located exceeds the third threshold TH3.

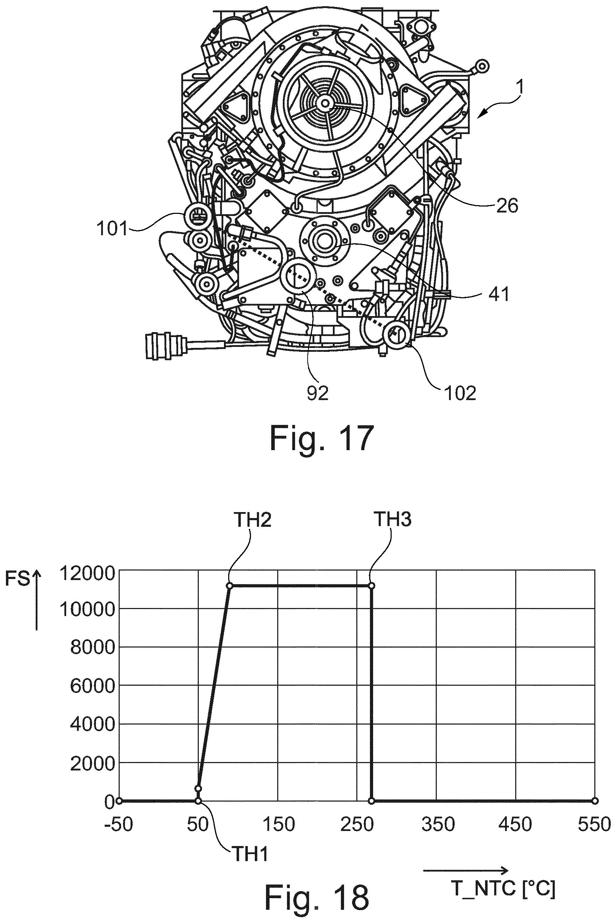

In Fig. 17, a NTC thermistor 92 is installed between two components 101 and 102 that have the lowest temperature limit, similar as in Fig. 9. Fig. 18 shows the corresponding fan speed as a function of the temperature T_NTC of the thermistor 92. The curve is similar to the curve of Fig. 10 such that reference is made to the description of Fig. 10. However, there is no controller involved and no warning messages are sent to the cockpit.

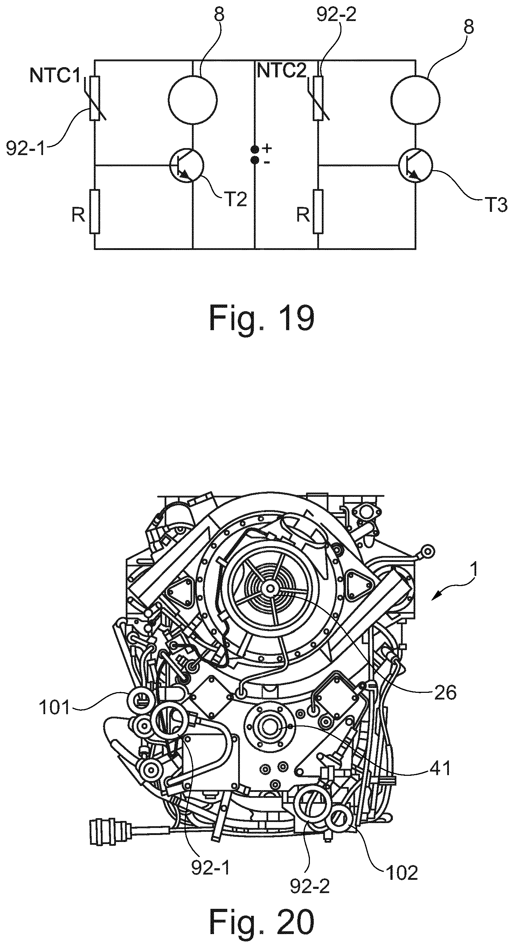

Fig. 19 shows an electrical circuit comprising two transistor T2, T3, two electric fans 8, two resistors R and two NTC thermistors 92-1, 92-2. Each electric fan 8 is connected to one NTC resistor and both electric fans 8 can turn at different speed as the NTC thermal environment might not be the same. The sensing and the regulating function are both performed by the NTC thermistors 92-1, 92-2. The principal operation of the circuit of Fig. 19 is the same as of the first circuit of Fig. 14. However, the fan speed can be controlled independently.

As shown in Fig. 20, the two NTC thermistors 92-1, 92-2 may be located inside the compartment 7 near the two components 101, 102 that have the lowest temperature limit.

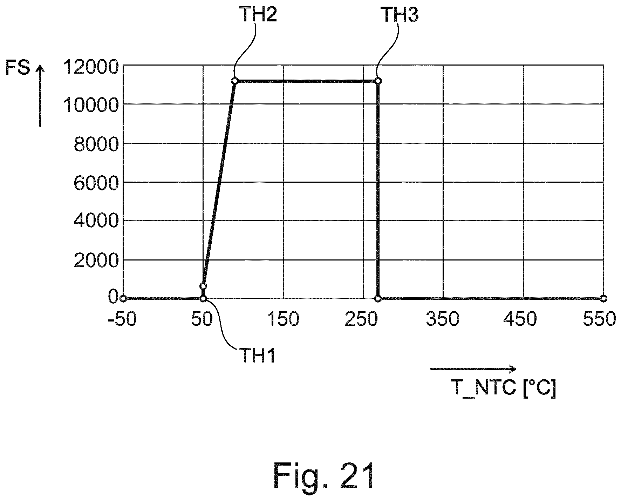

Fig. 21 shows the corresponding fan speed as a function of the temperature T_NTC of the NTC thermistors 92-1, 92-2. The depicted curve, which is similar to the curve of Fig. 18, applies to each of the two independent NTC thermistors 92-1, 92-2 and the corresponding electric fan 8.

The electric fans 8 of all embodiments may be any standard electric fans such as electric fans of the Papst 4114 axial blower family sold by ebm-papst Mulfingen GmbH & Co. KG. While in the described embodiments a turbine generator system is implemented in a hybrid electric aircraft, the invention is not limited to such application. The turbine generator system and its ventilation system may be applied to any hybrid vehicle. For example, it could alternatively be implemented in a combat vehicle such as a tank or a sea or land drone which needs to reload electric batteries while at very low speed and operate in a silent/all electric mode. In another example, the turbine generator system may be implemented in a truck, bus or locomotive. It could further be implemented in a hybrid hovercraft or any hybrid naval vessel.

It should be understood that the above description is intended for illustrative purposes only and is not intended to limit the scope of the present disclosure in any way. Also, those skilled in the art will appreciate that other aspects of the disclosure can be obtained from a study of the drawings and the disclosure.

All methods described herein can be performed in any suitable order unless otherwise indicated herein or otherwise clearly contradicted by context. Various features of the various embodiments disclosed herein can be combined in different combinations to create new embodiments within the scope of the present disclosure. In particular, the disclosure extends to and includes all combinations and sub-combinations of one or more features described herein. Any ranges given herein include any and all specific values within the range and any and all sub-ranges within the given range. The scope of the claimed invention is defined in the appended claims.

## Claims

1. Turbine generator system (1) configured for a hybrid electric aircraft comprising:
- a gas turbine engine (2) having an output shaft (26),
- an electrical generator (4) coupled to the gas turbine engine output shaft (26), the electrical generator (4) converting mechanical energy into electrical energy,
- wherein the gas turbine engine (1) is configured to be located in a compartment (7), the compartment (7) having a compartment wall (71),
- a ventilation system comprising:
- at least one air inlet (51, 53) arranged in the compartment wall (71) and configured to allow air to flow into the compartment (7),
- at least one air outlet (6) arranged in the compartment wall (71) and configured to allow air to flow out of the compartment (7),
- at least one electric cooling fan (8) with an adjustable fan speed located in, upstream or downstream of the air inlet (51, 53), the electric cooling fan (8) adjusting by its fan speed the amount of air flowing into the compartment (7), and
- temperature sensing means (91, 92) for sensing the temperature inside the compartment (7) or at the air outlet (6),
- wherein the ventilation system is configured such that the cooling fan (8) adjusts its fan speed depending on the temperature sensed by the temperature sensing means (91, 92),
and wherein the at least one air inlet (51, 53) comprises first and second air inlets and the at least one electric cooling fan (8) comprises first and second electric cooling fans each associated with one of the first and second air inlets, wherein the first and second air inlets (51, 53) are configured to be located symmetrically in the compartment.

2. The system of claim 1, **characterized in that** the ventilation system further comprises third and fourth air inlets (52) not associated with a cooling fan.

3. The system of claims 2 , **characterized in that** the first and second air inlets (51, 53) are lower air inlets and that the third and fourths air inlets (52) are upper air inlets located elevated in the compartment compared to the first and second air inlets (51, 53).

4. The system of any of the preceding claims, **characterized in that** the air inlet (51) is formed as a scoop inlet.

5. The system of claim 4, **characterized in that** the scoop inlet (51) forms an upstream duct (513) at the outside of the compartment (7), wherein the electric cooling fan (8) is located in the upstream duct (513).

6. The system of any of claims 1 to 3, **characterized in that** the air inlet (53) is formed by a flush inlet.

7. The system of claim 6, **characterized in that** the flush inlet (53) comprises a grid (531) configured to be located in an opening (530) in the compartment wall (71), wherein the cooling fan (8) is located behind the grid (531).

8. The system of any of the preceding claims, **characterized in that** the system (1) is configured to adjust the fan speed depending on the temperature sensed by the temperature sensing means (91, 92) **in that**
- if the temperature sensed by the temperature sensing means (91, 92) is below a first threshold (TH1), the cooling fan (8) is shut down, and/or
- if the temperature sensed by the temperature sensing means (91, 92) is at or above the first threshold (TH1) and below a second threshold (TH2), the fan speed is rising with the temperature, and/or
- if the temperature sensed by the temperature sensing means (91, 92) is at or above the second threshold (TH2) and below a third threshold (TH3), the fan speed is at a maximum value, and/or
- if the temperature sensed by the temperature sensing means (91, 92) is at or above the third threshold (TH3), the cooling fan (8) is shut down.

9. The system of any of the preceding claims, **characterized in that** the cooling fan (8) is configured to adjust its fan speed based on signals received from a controller (10), wherein the controller (10) is configured to receive input signals from the temperature sensing means (91) and control the fan speed.

10. The system of claim 9, **characterized in that** the controller (10) is further configured to provide status information to a cockpit (150).

11. The system of claim 10, as far as referring to claim 8, **characterized in that** the controller (10) is configured to send an overheating warning message (A1) to the cockpit (150) if the sensed temperature is above a fourth threshold (TH4) which lies between the second threshold (TH2) and the third threshold (TH3) and/or is configured to send a fire alarm warning message (A2) to the cockpit (150) if the sensed temperature is at or above the third threshold (TH3).

12. The system of any of the preceding claims, **characterized in that** the temperature sensing means (91) comprise a thermocouple located at or in close proximity to the air outlet (6) or configured to be located inside the compartment (7).

13. The system of any of claims 1 to 11, **characterized in that** the temperature sensing means (92) comprises a temperature-dependent resistor located at the air outlet (6) or configured to be located inside the compartment (7), wherein the resistance of the temperature-dependent resistor (92) determines the fan speed.

14. The system of any of the preceding claims, **characterized in that** the electrical generator (4) comprises an input shaft (41), and **in that** the system further comprises a gearbox (3) coupling the gas turbine engine output shaft (26) with the electrical generator input shaft (41), wherein the gearbox (3) is also configured to be located in the compartment (7).

## Patentansprüche

1. Turbinengeneratorsystem (1), das für ein Hybridelektroluftfahrzeug ausgestaltet ist, umfassend:
- ein Gasturbinentriebwerk (2) mit einer Abtriebswelle (26),
- einen mit der Gasturbinentriebwerkabtriebswelle (26) gekoppelten Stromgenerator (4), wobei der Stromgenerator (4) mechanische Energie in elektrische Energie umwandelt,
- wobei das Gasturbinentriebwerk (1) so ausgestaltet ist, dass es sich in einer Kammer (7) befindet, wobei die Kammer (7) eine Kammerwand (71) aufweist,
- ein Belüftungssystem, umfassend:
- mindestens einen Lufteinlass (51, 53), der in der Kammerwand (71) angeordnet und dazu ausgestaltet ist, das Einströmen von Luft in die Kammer (7) zu erlauben,
- mindestens einen Luftauslass (6), der in der Kammerwand (71) angeordnet und dazu ausgestaltet ist, das Ausströmen von Luft aus der Kammer (7) zu erlauben,
- mindestens ein elektrisches Kühlgebläse (8) mit einer einstellbaren Gebläsedrehzahl, das sich in, stromaufwärts oder stromabwärts von dem Lufteinlass (51, 53) befindet, wobei das elektrische Kühlgebläse (8) durch seine Gebläsedrehzahl die Menge von in die Kammer (7) einströmender Luft einstellt, und
- Temperaturmesseinrichtungen (91, 92) zum Messen der Temperatur innerhalb der Kammer (7) oder an dem Luftauslass (6),
- wobei das Belüftungssystem so ausgestaltet ist, dass das Kühlgebläse (8) seine Gebläsedrehzahl in Abhängigkeit von der durch die Temperaturmesseinrichtungen (91, 92) gemessenen Temperatur einstellt,
und wobei der mindestens eine Lufteinlass (51, 53) einen ersten und einen zweiten Lufteinlass umfasst und das mindestens eine elektrische Kühlgebläse (8) ein erstes und ein zweites elektrisches Kühlgebläse, die je mit einem von dem ersten und dem zweiten Lufteinlass assoziiert sind, umfasst, wobei der erste und der zweite Lufteinlass (51, 53) so ausgestaltet sind, dass sie symmetrisch in der Kammer angeordnet sind.

2. System nach Anspruch 1, **dadurch gekennzeichnet, dass** das Belüftungssystem ferner einen dritten und einen vierten Lufteinlass (52), die nicht mit einem Kühlgebläse assoziiert sind, umfasst.

3. System nach Anspruch 2, **dadurch gekennzeichnet, dass** der erste und der zweite Lufteinlass (51, 53) untere Lufteinlässe sind und dass der dritte und der vierte Lufteinlass (52) obere Lufteinlässe sind, die sich im Vergleich zu dem ersten und dem zweiten Lufteinlass (51, 53) in der Kammer weiter oben befinden.

4. System nach einem der vorhergehenden Ansprüche, **dadurch gekennzeichnet, dass** der Lufteinlass (51) als eine Lufthutze ausgebildet ist.

5. System nach Anspruch 4, **dadurch gekennzeichnet, dass** die Lufthutze (51) einen stromaufwärts befindlichen Kanal (513) an der Außenseite der Kammer (7) ausbildet, wobei sich das elektrische Kühlgebläse (8) in dem stromaufwärts befindlichen Kanal (513) befindet.

6. System nach einem der Ansprüche 1 bis 3, **dadurch gekennzeichnet, dass** der Lufteinlass (53) durch einen bündigen Einlass ausgebildet wird.

7. System nach Anspruch 6, **dadurch gekennzeichnet, dass** der bündige Einlass (53) ein Gitter (531) umfasst, das so ausgestaltet ist, dass es sich in einer Öffnung (530) in der Kammerwand (71) befindet, wobei sich das Kühlgebläse (8) hinter dem Gitter (531) befindet.

8. System nach einem der vorhergehenden Ansprüche, **dadurch gekennzeichnet, dass** das System (1) dazu ausgestaltet ist, die Gebläsedrehzahl in Abhängigkeit von der durch die Temperaturmesseinrichtungen (91, 92) gemessenen Temperatur folgendermaßen einzustellen:
- wenn die von den Temperaturmesseinrichtungen (91, 92) gemessene Temperatur unter einem ersten Schwellenwert (TH1) liegt, wird das Kühlgebläse (8) abgeschaltet und/oder,
- wenn die von den Temperaturmesseinrichtungen (91, 92) gemessene Temperatur auf oder über dem ersten Schwellenwert (TH1) und unter einem zweiten Schwellenwert (TH2) liegt, steigt die Gebläsedrehzahl mit der Temperatur an und/oder,
- wenn die von den Temperaturmesseinrichtungen (91, 92) gemessene Temperatur auf oder über dem zweiten Schwellenwert (TH2) und unter einem dritten Schwellenwert (TH3) liegt, liegt die Gebläsedrehzahl bei einem Höchstwert und/oder,
- wenn die von den Temperaturmesseinrichtungen (91, 92) gemessene Temperatur auf oder über dem dritten Schwellenwert (TH3) liegt, wird das Kühlgebläse (8) abgeschaltet.

9. System nach einem der vorhergehenden Ansprüche, **dadurch gekennzeichnet, dass** das Kühlgebläse (8) dazu ausgestaltet ist, seine Gebläsedrehzahl basierend auf von einer Steuerung (10) empfangenen Signalen einzustellen, wobei die Steuerung (10) dazu ausgestaltet ist, Eingangssignale von der Temperaturmesseinrichtung (91) zu empfangen und die Gebläsedrehzahl zu steuern.

10. System nach Anspruch 9, **dadurch gekennzeichnet, dass** die Steuerung (10) ferner dazu ausgestaltet ist, einem Cockpit (150) Statusinformationen bereitzustellen.

11. System nach Anspruch 10, wenn von Anspruch 8 abhängig, **dadurch gekennzeichnet, dass** die Steuerung (10) dazu ausgestaltet ist, eine Überhitzungswarnnachricht (A1) an das Cockpit (150) zu senden, wenn die gemessene Temperatur über einem vierten Schwellenwert (TH4) liegt, der zwischen dem zweiten Schwellenwert (TH2) und dem dritten Schwellenwert (TH3) liegt, und/oder dazu ausgestaltet ist, eine Feuermeldewarnnachricht (A2) an das Cockpit (150) zu senden, wenn die gemessene Temperatur auf oder über dem dritten Schwellenwert (TH3) liegt.

12. System nach einem der vorhergehenden Ansprüche, **dadurch gekennzeichnet, dass** die Temperaturmesseinrichtungen (91) ein Thermoelement umfassen, das sich an oder in unmittelbarer Nähe zu dem Luftauslass (6) befindet oder so ausgestaltet ist, dass es sich innerhalb der Kammer (7) befindet.

13. System nach einem der Ansprüche 1 bis 11, **dadurch gekennzeichnet, dass** die Temperaturmesseinrichtung (92) ein temperaturabhängiges Widerstandsbauelement umfasst, das sich an dem Luftauslass (6) befindet oder so ausgestaltet ist, dass es sich innerhalb der Kammer (7) befindet, wobei der Widerstand des temperaturabhängigen Widerstandsbauelements (92) die Gebläsedrehzahl bestimmt.

14. System nach einem der vorhergehenden Ansprüche, **dadurch gekennzeichnet, dass** der Stromgenerator (4) eine Antriebswelle (41) umfasst und dass das System ferner ein die Gasturbinentriebwerkabtriebswelle (26) mit der Stromgeneratorantriebswelle (41) koppelndes Getriebe (3) umfasst, wobei das Getriebe (3) auch so ausgestaltet ist, dass es sich in der Kammer (7) befindet.

## Revendications

1. Système turbogénérateur (1) configuré pour un aéronef hybride électrique, comprenant :
- un moteur à turbine à gaz (2) pourvu d'un arbre de sortie (26),
- un générateur électrique (4) accouplé à l'arbre de sortie (26) du moteur à turbine à gaz, le générateur électrique (4) convertissant l'énergie mécanique en énergie électrique,
- le moteur à turbine à gaz (1) étant configuré pour être disposé dans un compartiment (7), le compartiment (7) étant pourvu d'une paroi de compartiment (71),
- un système de ventilation comprenant :
- au moins une entrée d'air (51, 53) agencée dans la paroi de compartiment (71) et configurée pour permettre à l'air de s'écouler jusque dans le compartiment (7),
- au moins une sortie d'air (6) agencée dans la paroi de compartiment (71) et configurée pour permettre à l'air de s'écouler hors du compartiment (7),
- au moins un ventilateur électrique de refroidissement (8) présentant une vitesse de ventilateur ajustable disposé dans, en amont ou en aval de l'entrée d'air (51, 53), le ventilateur électrique de refroidissement (8) ajustant, par sa vitesse de ventilateur, la quantité d'air s'écoulant jusque dans le compartiment (7), et
- des moyens de détection de température (91, 92) pour détecter la température à l'intérieur du compartiment (7) ou au niveau de la sortie d'air (6),
- le système de ventilation étant configuré pour que le ventilateur de refroidissement (8) ajuste sa vitesse de ventilateur en fonction de la température détectée par les moyens de détection de température (91, 92),
et l'au moins une entrée d'air (51, 53) comprenant des première et deuxième entrées d'air et l'au moins un ventilateur électrique de refroidissement (8) comprenant des premier et deuxième ventilateurs électriques de refroidissement dont chacun est associé à l'une des première et deuxième entrées d'air, les première et deuxième entrées d'air (51, 53) étant configurées pour être disposées symétriquement dans le compartiment.

2. Système selon la revendication 1, **caractérisé en ce que** le système de ventilation comprend en outre des troisième et quatrième entrées d'air (52) non associées à un ventilateur de refroidissement.

3. Système selon la revendication 2, **caractérisé en ce que** les première et deuxième entrées d'air (51, 53) sont des entrées d'air inférieures et **en ce que** les troisième et quatrième entrées d'air (52) sont des entrées d'air supérieures disposées en hauteur dans le compartiment par rapport aux première et deuxième entrées d'air (51, 53).

4. Système selon l'une quelconque des revendications précédentes, **caractérisé en ce que** l'entrée d'air (51) prend la forme d'une entrée en écope.

5. Système selon la revendication 4, **caractérisé en ce que** l'entrée en écope (51) forme un conduit amont (513) à l'extérieur du compartiment (7), le ventilateur électrique de refroidissement (8) étant disposé dans le conduit amont (513).

6. Système selon l'une quelconque des revendications 1 à 3, **caractérisé en ce que** l'entrée d'air (53) prend la forme d'une entrée affleurante.

7. Système selon la revendication 6, **caractérisé en ce que** l'entrée affleurante (53) comprend une grille (531) configurée pour être disposée dans une ouverture (530) dans la paroi de compartiment (71), le ventilateur de refroidissement (8) étant disposé derrière la grille (531).

8. Système selon l'une quelconque des revendications précédentes, le système (1) étant **caractérisé en ce qu'**il est configuré pour ajuster la vitesse de ventilateur en fonction de la température détectée par les moyens de détection de température (91, 92) en ce sens que
- si la température détectée par les moyens de détection de température (91, 92) est inférieure à un premier seuil (TH1), le ventilateur de refroidissement (8) est arrêté, et/ou
- si la température détectée par les moyens de détection de température (91, 92) est supérieure ou égale au premier seuil (TH1) et inférieure à un deuxième seuil (TH2), la vitesse de ventilateur augmente avec la température, et/ou
- si la température détectée par les moyens de détection de température (91, 92) est supérieure ou égale au deuxième seuil (TH2) et inférieure à un troisième seuil (TH3), la vitesse de ventilateur est à une valeur maximale, et/ou
- si la température détectée par les moyens de détection de température (91, 92) est supérieure ou égale au troisième seuil (TH3), le ventilateur de refroidissement (8) est arrêté.

9. Système selon l'une quelconque des revendications précédentes, **caractérisé en ce que** le ventilateur de refroidissement (8) est configuré pour ajuster sa vitesse de ventilateur sur la base de signaux reçus en provenance d'un contrôleur (10), le contrôleur (10) étant configuré pour recevoir des signaux d'entrée en provenance des moyens de détection de température (91) et commander la vitesse de ventilateur.

10. Système selon la revendication 9, **caractérisé en ce que** le contrôleur (10) est configuré en outre pour fournir des informations d'état à un poste de pilotage (150).

11. Système selon la revendication 10, lorsqu'elle dépend de la revendication 8, **caractérisé en ce que** le contrôleur (10) est configuré pour envoyer un message d'avertissement de surchauffe (A1) au poste de pilotage (150) si la température détectée est supérieure à un quatrième seuil (TH4) qui se situe entre le deuxième seuil (TH2) et le troisième seuil (TH3) et/ou est configuré pour envoyer un message d'avertissement d'alarme incendie (A2) au poste de pilotage (150) si la température détectée est supérieure ou égale au troisième seuil (TH3).

12. Système selon l'une quelconque des revendications précédentes, **caractérisé en ce que** les moyens de détection de température (91) comprennent un thermocouple disposé au niveau ou à proximité immédiate de la sortie d'air (6) ou configuré pour être disposé à l'intérieur du compartiment (7).

13. Système selon l'une quelconque des revendications 1 à 11, **caractérisé en ce que** les moyens de détection de température (92) comprennent une résistance dépendant de la température disposée au niveau de la sortie d'air (6) ou configurée pour être disposée à l'intérieur du compartiment (7), la valeur ohmique de la résistance dépendant de la température (92) déterminant la vitesse de ventilateur.

14. Système selon l'une quelconque des revendications précédentes, **caractérisé en ce que** le générateur électrique (4) comprend un arbre d'entrée (41), et **en ce que** le système comprend en outre une boîte de vitesses (3) accouplant l'arbre de sortie (26) du moteur à turbine à gaz à l'arbre d'entrée (41) du générateur électrique, la boîte de vitesses (3) étant également configurée pour être disposée dans le compartiment (7).
